# EUROPÄISCHE PATENTSCHRIFT

(11) **EP 3 250 423 B1**
(45) Veröffentlichungstag und Bekanntmachung des Hinweises auf die Patenterteilung: **13.03.2019**
(21) Anmeldenummer: 16700896.0
(22) Anmeldetag: 19.01.2016
(51) Int. Cl.: B60T 8/32, B60T 8/40, B60T 13/74

(54) **VERFAHREN ZUM BETRIEB EINER BREMSANLAGE SOWIE BREMSANLAGE WORIN DAS VERFAHREN DURCHGEFÜHRT WIRD**
METHOD FOR OPERATING A BRAKE SYSTEM, AND BRAKE SYSTEM WITH WHICH THE METHOD IS CARRIED OUT
PROCÉDÉ PERMETTANT DE FAIRE FONCTIONNER UN SYSTÈME DE FREINAGE ET SYSTÈME DE FREINAGE DANS LEQUEL LE PROCÉDÉ EST MIS EN OEUVRE

(30) Priorität: 27.01.2015 DE 102015201331
(43) Veröffentlichungstag der Anmeldung: 06.12.2017
(73) Patentinhaber: Continental Teves AG & Co. OHG, 60488 Frankfurt am Main (DE)
(72) Erfinder: BURKHARD, Dieter, 55411 Bingen-Büdesheim (DE)
(86) Internationale Anmeldenummer: PCT/EP2016/050939
(87) Internationale Veröffentlichungsnummer: WO 2016/120115

(56) Entgegenhaltungen:
- WO-A1-2013/131891
- DE-A1-102010 040 097
- DE-A1-102011 077 329
- DE-A1-102013 105 377
- JP-A- 2012 206 853

## Beschreibung

Die Erfindung betrifft ein Verfahren zum Betrieb einer Bremsanlage gemäß dem Oberbegriff von Anspruch 1 und eine Bremsanlage gemäß dem Oberbegriff von Anspruch 10.

Aus der DE 10 2010 040 097 A1 ist eine "Brake-by-wire"-Bremsanlage für Kraftfahrzeuge bekannt, welche einen bremspedalbetätigbaren Tandem-Hauptbremszylinder, eine mit dem Hauptbremszylinder hydraulisch verbundene Simulationseinrichtung, eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, und eine Druckmodulationseinheit zum Einstellen radindividueller Bremsdrücke, die pro Radbremse ein Einlassventil und ein Auslassventil aufweist, umfasst. Zur Durchführung einer Normalbremsung in der "Brake-by-wire"-Betriebsart der Bremsanlage werden die Radbremsen bei geöffneten Zuschalt- und Einlassventilen durch ein elektrisch gesteuertes Vorschieben des Kolbens der Druckbereitstellungseinrichtung mit dem Systemdruck der Druckbereitstellungseinrichtung beaufschlagt. Führt der Fahrer eine Panikbremsung durch, welche zu einem Eintritt in eine Antiblockierregelung für alle Radbremsen führt, muss der anfängliche Bremsdruckaufbau an jeder der Radbremsen bei Eintritt in die Antiblockierregelung möglichst schnell beendet werden. Hierzu werden die Einlassventile aller Radbremsen geschlossen und das Vorschieben des Kolbens der Druckbereitstellungseinrichtung wird beendet. Da bei der Panikbremsung zunächst hohe Druckaufbaugradienten aus Sicherheitsgründen gewünscht sind, wird die Druckbereitstellungseinrichtung bzw. deren antreibender elektromechanischer Aktuator in dieser Situation mit einer hohen bzw. maximalen Dynamik betrieben werden. Dann kann das Schließen aller Einlassventile bei Eintritt in die Antiblockierregelung selbst bei einem zeitgleich ausgegebenen Ansteuerbefehl zum Stoppen des elektromechanischen Aktuators aufgrund der Trägheit des elektromechanischen Aktuators zu einem "Nachverdrängen" von Druckmittelvolumen aus dem Druckraum der Druckbereitstellungseinrichtung führen. Hierdurch kann ein sehr hoher Staudruck in dem System entstehen, welcher zu einer Schädigung des elektromechanischen Aktuators oder im Extremfall zum Bersten des Systems führen kann.

In der DE 10 2011 077 329 A1 ist ein Verfahren zur Regelung eines elektrohydraulischen "Brake-by-wire"-Bremssystems mit einer Antiblockierregelfunktion, einem Einlass- und einem Auslassventil je Radbremse und einer elektrisch ansteuerbaren Druckbereitstellungseinrichtung beschrieben, welche eine Zylinder-Kolben-Anordnung mit einem hydraulischen Druckraum umfasst, deren Kolben durch einen elektromechanischen Aktuator verschiebbar ist. Dabei wird in der DE 10 2011 077 329 A1 beschrieben, dass während einer Antiblockierregelung stets zumindest eine Radbremse im Sinne eines vollständigen Druckausgleichs zwischen Radbremse und Druckraum über das zugehörige, geöffnete Einlassventil mit dem hydraulischen Druckraum der Druckbereitstellungseinrichtung verbunden ist, so dass der Bremsdruckverlauf an dieser Radbremse ausschließlich durch Vor- und Zurückfahren des Kolbens der Druckbereitstellungseinrichtung variiert wird. Dies ist jedoch nicht in jeder Bremssituation sinnvoll möglich.

Es ist Aufgabe der vorliegenden Erfindung, ein Verfahren zum Betrieb einer Bremsanlage mit einer elektrisch steuerbaren Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, sowie eine Bremsanlage bereitzustellen, durch welches bzw. in welchem eine Schädigung der Bremsanlage bei einem Schließen der Einlassventile aller an die Druckbereitstellungseinrichtung angeschlossenen Radbremsen verhindert wird.

Diese Aufgabe wird erfindungsgemäß durch ein Verfahren zum Betrieb einer Bremsanlage gemäß Anspruch 1 und eine Bremsanlage gemäß Anspruch 10 gelöst.

Der Erfindung liegt der Gedanke zugrunde in einer Bremsanlage, in welcher in einem Normalregelungsmodus bei Vorliegen einer vorgegebenen Bremsbedingung ein Verschieben des Kolbens der Druckbereitstellungseinrichtung durch Ausgabe eines Ansteuersignals an die Druckbereitstellungseinrichtung beendet wird und die Einlassventile der Radbremsen, d.h. aller an die Druckbereitstellungseinrichtung angeschlossenen Radbremsen, geschlossen werden, in einen Sonderregelungsmodus umzuschalten, wenn eine vorgegebene Bedingung für die Druckbereitstellungseinrichtung vorliegt. Bei Vorliegen der vorgegebenen Bremsbedingung in dem Sonderregelungsmodus wird ein Verschieben des Kolbens der Druckbereitstellungseinrichtung durch Ausgabe eines Ansteuersignals an die Druckbereitstellungseinrichtung beendet und es wird für zumindest eine ausgewählte Radbremse das zugehörige Einlassventil offen gehalten und das zugehörige Auslassventil zumindest zeitweise geöffnet, während die Einlassventile der übrigen Radbremsen geschlossen werden.

Die Erfindung bietet den Vorteil, dass die Bremsanlage vor einer Schädigung geschützt wird, da bei Vorliegen der vorgegebenen Bremsbedingung eventuell aufgrund der Trägheit des elektromechanischen Aktuators aus dem Druckraum der Druckbereitstellungseinrichtung nach Ausgabe des Ansteuersignals verdrängtes Druckmittelvolumen über das zumindest zeitweise geöffnete Auslassventil in den Druckmittelvorratsbehälter abfließen kann.

In der Druckbereitstellungseinrichtung führt ein Verschieben des Kolbens in eine Druckaufbaurichtung zu einem Verdrängen von Druckmittel aus dem Druckraum.

Bevorzugt handelt es sich bei dem Beenden des Verschiebens des Druckbereitstellungseinrichtungs-Kolbens um ein Beenden des Verschiebens in Druckaufbaurichtung.

Bevorzugt wird überprüft, ob eine vorgegebene Bedingung für die Druckbereitstellungseinrichtung vorliegt, und bei Erkennen eines Vorliegens der Bedingung für die Druckbereitstellungseinrichtung wird in den Sonderregelungsmodus umgeschaltet.

Bevorzugt handelt es sich um eine Bremsanlage, die in einer "Brake-by-wire"-Betriebsart sowohl vom Fahrzeugführer als auch unabhängig vom Fahrzeugführer ansteuerbar ist, normalerweise in der "Brake-by-wire"-Betriebsart betrieben wird und in einer Rückfallbetriebsart betrieben werden kann.

Bei der vorgegebenen Bremsbedingung handelt es sich bevorzugt um die Bedingung, dass ein Druckaufbau an jeder der an die Druckbereitstellungseinrichtung angeschlossenen Radbremsen beendet bzw. gestoppt werden soll. Diese Bedingung bzw. Anforderung wird beispielsweise von einer Antiblockierregelfunktion oder einer anderen Regelfunktion der Bremsanlage angefordert.

Bei der vorgegebenen Bedingung für die Druckbereitstellungseinrichtung handelt es sich bevorzugt um die Bedingung, dass sich die Druckbereitstellungseinrichtung in einem kritischen Betriebszustand befindet. Ein kritischer Betriebszustand liegt besonders bevorzugt vor, wenn der elektromechanische Aktuator mit hoher Dynamik betrieben wird.

Ein kritischer Betriebszustand wird bevorzugt anhand einer Geschwindigkeit der Druckbereitstellungseinrichtung erkannt. Ein kritischer Betriebszustand liegt beispielsweise vor, wenn die Geschwindigkeit der Druckbereitstellungseinrichtung einen vorgegebenen Geschwindigkeitsschwellenwert überschreitet. Besonders bevorzugt wird eine Geschwindigkeit des Kolbens der Druckbereitstellungseinrichtung oder eine Drehgeschwindigkeit des elektromechanischen Aktuators zur Erkennung des kritischen Betriebszustands ausgewertet.

Bevorzugt umfasst die Bremsanlage einen Wegsensor, welcher den Verschiebeweg bzw. die Position des Kolbens der Zylinder-Kolben-Anordnung erfasst. Anhand der Positionsänderung des Kolbens kann die Kolbengeschwindigkeit bestimmt werden.

Bevorzugt umfasst der elektromechanische Aktuator einen Elektromotor und ein Rotations-Translations-Getriebe, wobei zur Erfassung einer Rotorlage des Elektromotors ein Rotorlagensensor vorgesehen ist. Anhand der Rotorlageänderung kann die Drehgeschwindigkeit des Elektromotors bestimmt werden, welche die Kolbengeschwindigkeit repräsentiert.

Bevorzugt wird der kritische Betriebszustand der Druckbereitstellungseinrichtung zusätzlich anhand einer Position der Druckbereitstellungseinrichtung erkannt. Vorteilhafterweise wird hierzu die Lage/Position des Kolbens der Druckbereitstellungseinrichtung herangezogen.

Aus Gründen der Fahrstabilität und um ein möglichst schnelle Abfließen des verdrängten Druckmittelvolumens zu garantieren, ist bevorzugt mehr als eine einzige Radbremse ausgewählte Radbremse.

Gemäß einer Weiterbildung des erfindungsgemäßen Verfahrens sind die Radbremsen einer Achse des Kraftfahrzeugs ausgewählte Radbremsen, d.h. deren Einlassventile werden nicht geschlossen und deren Auslassventile werden zumindest zeitweise geöffnet. Aus Gründen eines kurzen Bremsweges sind besonders bevorzugt die Radbremsen der Hinterachse des Kraftfahrzeugs ausgewählte Radbremsen.

Um die Auslassventile nur möglichst kurzzeitig zu öffnen und einen übermäßigen Verlust von Druckmittel in den Druckmittelvorratsbehälter zu verhindern, wird bevorzugt eine Druckmittelvolumenabschätzung durchgeführt, in welcher bestimmt wird, wie viel Druckmittelvolumen aus der Druckbereitstellungseinrichtung nach Ausgabe des Ansteuersignals noch verdrängt werden wird, bis der Kolben der Druckbereitstellungseinrichtung zu einem Stillstand kommt oder die vorgegebene Bedingung für die Druckbereitstellungseinrichtung nicht mehr vorliegt, d.h. der Kolben der Druckbereitstellungseinrichtung unter den kritischen Betriebszustand kommt.

Es wird bevorzugt zumindest eine Öffnungszeit für das Auslassventil der ausgewählten Radbremse oder für die Auslassventile der ausgewählten Radbremsen anhand des abgeschätzten Druckmittelvolumens bestimmt.

Bevorzugt wird bzw. werden, wenn das abgeschätzte Druckmittelvolumen durch das Auslassventil oder die Auslassventile abgelassen wurde,
- das Auslassventil der ausgewählten Radbremse wieder geschlossen oder die Auslassventile der ausgewählten Radbremsen wieder geschlossen, und
- das Einlassventil der ausgewählten Radbremse geschlossen oder die Einlassventile der ausgewählten Radbremsen geschlossen.

Gemäß einer Weiterbildung des erfindungsgemäßen Verfahrens wird von dem Sonderregelungsmodus in den Normalregelungsmodus umgeschaltet, wenn die vorgegebene Bedingung für die Druckbereitstellungseinrichtung nicht mehr vorliegt.

Die Erfindung betrifft auch eine Bremsanlage für Kraftfahrzeuge, in der ein erfindungsgemäßes Verfahren durchgeführt wird.

Bevorzugt umfasst die Bremsanlage zusätzlich einen Hauptbremszylinder mit einem Gehäuse und zwei Kolben, die in dem Gehäuse zwei Druckräume begrenzen, wobei jeder Druckraum über ein elektrisch betätigbares, vorteilhafterweise stromlos offenes, Trennventil trennbar mit Radbremsen verbunden ist.

Bevorzugt umfasst die Bremsanlage ein mit dem Hauptbremszylinder gekoppeltes Bremspedal zum Betätigen des Hauptbremszylinders, wobei eine Betätigung des Bremspedals überwacht wird.

Bevorzugt umfasst die Bremsanlage eine mit dem Hauptbremszylinder hydraulisch verbundene Simulationseinrichtung, deren Wirkung mittels eines elektrisch betätigbaren, vorteilhafterweise stromlos geschlossenen, Simulatorventils zu- und abschaltbar ist.

Bevorzugt ist zwischen der Druckbereitstellungeinrichtung und den Einlassventilen zumindest ein elektrisch betätigbares, vorteilhafterweise stromlos geschlossenes, Zuschaltventil angeordnet.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein Ausführungsbeispiel einer beispielsgemäßen Bremsanlage zur Durchführung eines erfindungsgemäßen Verfahrens, und
- Fig. 2: ein Blockdiagramm zur Erläuterung eines beispielsgemäßen Verfahrens.

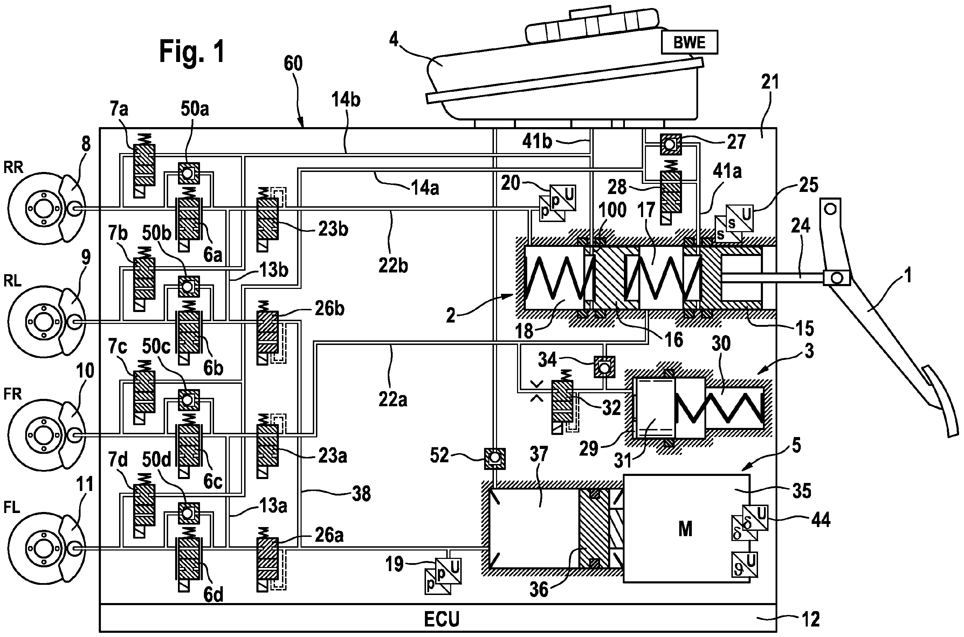

In Fig. 1 ist ein Ausführungsbeispiel einer Bremsanlage zur Durchführung eines erfindungsgemäßen Verfahrens schematisch dargestellt. Die Bremsanlage umfasst im Wesentlichen einen mittels eines Betätigungs- bzw. Bremspedals 1 betätigbaren Hauptbremszylinder 2, eine mit dem Hauptbremszylinder 2 zusammen wirkende Simulationseinrichtung 3, einen dem Hauptbremszylinder 2 zugeordneten, unter Atmosphärendruck stehenden Druckmittelvorratsbehälter 4, eine elektrisch steuerbare Druckbereitstellungseinrichtung 5, welche durch eine Zylinder-Kolben-Anordnung mit einem hydraulischen Druckraum 37 gebildet wird, deren Kolben 36 durch einen elektromechanischen Aktuator verschiebbar ist, eine elektrisch steuerbare Druckmodulationseinrichtung zum Einstellen radindividueller Bremsdrücke und eine elektronische Steuer- und Regeleinheit 12.

Die nicht näher bezeichnete Druckmodulationseinrichtung umfasst beispielsgemäß je hydraulisch betätigbarer Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an einen Druckraum 37 der elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes Rückschlagventil 50a-50d parallel geschaltet. In einer Rückfallbetriebsart werden die Bremskreisversorgungsleitungen 13a, 13b über hydraulische Leitungen 22a, 22b mit den Drücken der Druckräume 17, 18 des Hauptbremszylinders 2 beaufschlagt. Die Ausgangsanschlüsse der Auslassventile 7a-7d sind paarweise über Rücklaufleitungen 14a, 14b mit dem Druckmittelvorratsbehälter 4 verbunden.

Gemäß dem Ausführungsbeispiel sind die Radbremsen 10 und 11 dem rechten Vorderrad (FR) und dem linken Vorderrad (FL) zugeordnet und sind mit der Bremskreisversorgungsleitung 13a (erster Bremskreis) verbunden. Die Radbremsen 8 und 9 sind dem rechten Hinterrad (RR) und dem linken Hinterrad (RL) zugeordnet und mit der Bremskreisversorgungsleitung 13b (zweiter Bremskreis) verbunden. Andere Bremskreisaufteilungen sind denkbar.

Der Hauptbremszylinder 2 weist in einem Gehäuse 21 zwei hintereinander angeordnete Kolben 15, 16 auf, die hydraulische Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei die Verbindungen durch eine Relativbewegung der Kolben 17, 18 im Gehäuse 21 absperrbar sind. Die Druckräume 17, 18 stehen andererseits mittels der hydraulischen Leitungen 22a, 22b mit den bereits genannten Bremskreisversorgungsleitungen 13a, 13b in Verbindung. In der Druckausgleichsleitung 41a ist eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptbremszylinder-)Kolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

In den an die Druckräume 17, 18 angeschlossenen Leitungsabschnitten 22a, 22b ist je ein Trennventil 23a, 23b angeordnet, welches als ein elektrisch betätigbares, vorzugsweise stromlos offenes (SO-), 2/2-Wegeventil ausgebildet ist. Durch die Trennventile 23a, 23b kann die hydraulische Verbindung zwischen den Druckräumen 17, 18 des Hauptbremszylinders und den Bremskreisversorgungsleitungen 13a, 13b abgesperrt werden.

Ein an den Leitungsabschnitt 22b angeschlossener Drucksensor 20 erfasst den im Druckraum 18 durch ein Verschieben des zweiten Kolbens 16 aufgebauten Druck.

Die Simulationseinrichtung 3 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorventils 32 mit dem ersten Druckraum 17 des Hauptbremszylinders 2 verbindbar. Bei Vorgabe einer Pedalkraft und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen und Anbindungen der Simulationseinrichtung an den Hauptbremszylinder 2 sind denkbar.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, deren/ dessen Kolben 36, welcher den Druckraum 37 begrenzt, von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden.

Es ist auch denkbar, dass die Druckbereitstellungseinrichtung als ein zweikreisiger elektrohydraulischer Aktuator mit zwei Druckräumen ausgebildet ist, wobei jedem der Druckräume eine der Bremskreisversorgungsleitungen 13a, 13b zugeordnet ist bzw. jeder der Druckräume mit genau einer der Bremskreisversorgungsleitungen 13a, 13b verbunden ist.

Der durch die Kraftwirkung des Kolbens 36 auf das in dem Druckraum 37 eingeschlossene Druckmittel erzeugte Aktuatordruck wird in die Systemdruckleitung 38 eingespeist und mit einem vorzugsweise redundant ausgeführten Drucksensor 19 erfasst. Bei geöffneten Zuschaltventilen 26a, 26b gelangt das Druckmittel in die Radbremsen 8, 9, 10, 11 zu deren Betätigung. Durch Vor- und Zurückschieben des Kolbens 36 erfolgt so bei geöffneten Zuschaltventile 26a, 26b (und offenen Einlassventilen 6a-6d) bei einer Normalbremsung in der "Brake-by-Wire"-Betriebsart ein Radbremsdruckaufbau und -abbau für alle Radbremsen 8, 9, 10, 11.

Der Ansteuerung der elektrisch betätigbaren Komponenten, insbesondere der Ventile 6a-6d, 7a-7d, 23a, 23b, 26a, 26b, 28, 32 und des Elektromotors 35 der Druckbereitstellungseinrichtung 5, dient die elektronische Steuer- und Regeleinheit 12. Die Signale der Sensoren 19, 20, 25 und 44 werden ebenso in der elektronische Steuer- und Regeleinheit 12 verarbeitet.

Das erfindungsgemäße Verfahren kann auch in einer Bremsanlage durchgeführt werden, welche eine Zylinder-Kolben-Anordnung mit zumindest einem hydraulischen Druckraum umfasst, deren Kolben alternativ oder gleichzeitig durch einen elektromechanischen Aktuator oder mittels eines Bremspedals durch einen Fahrer verschiebbar ist, d.h. bei welcher die Zylinder-Kolben-Anordnung eine elektrisch steuerbare Druckbereitstellungseinrichtung und einen Bremspedal-betätigbaren Hauptbremszylinder darstellt. Eine derartige Bremsanlage ist z.B. aus der DE 10 2013 105 377 A1 bekannt.

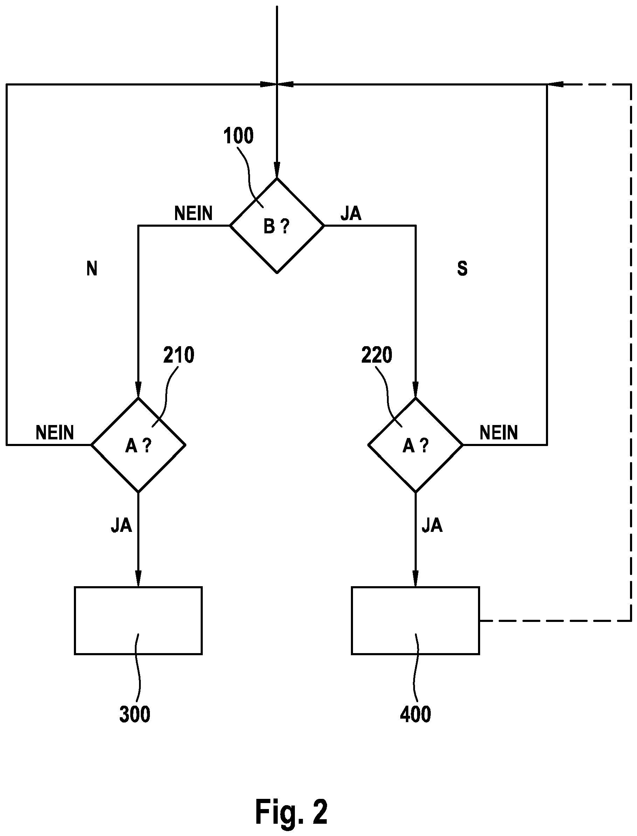

In Fig. 2 ist ein stark schematisches Blockdiagramm zur Erläuterung eines beispielsgemäßen Verfahrens zum Betrieb einer Bremsanlage dargestellt. Das beispielsgemäße Verfahren bezieht sich auf die beispielsgemäße Bremsanlage der Fig. 1.

Während einer Bremsung mittels der Druckbereitstellungseinrichtung 5, d.h. in der "Brake-by-wire"-Betriebsart, wird in Block 100 wiederholt überprüft, ob eine vorgegebene Bedingung B eines kritischen Zustandes der Druckbereitstellungseinrichtung 5 vorliegt. Solange die Bedingung B nicht vorliegt (NEIN in Block 100) befindet sich die Bremsanlage in einem Normalregelungsmodus N. Wird im Normalregelungsmodus N eine Beendigung des Druckaufbaus an allen an die Druckbereitstellungseinrichtung 5 angeschlossenen Radbremsen angefordert, d.h. liegt eine entsprechende vorgegebene Bremsbedingung A in Block 210 vor (JA in Block 210), so werden in Block 300 die Einlassventile 6a-6d der Radbremsen 8-11 geschlossen. Weiterhin wird in Block 300 ein Ansteuersignal an die Druckbereitstellungseinrichtung 5 ausgegeben, welches ein Vorschieben des Kolbens 36 der Druckbereitstellungseinrichtung 5 beendet.

Wird in Block 100 erkannt, dass die Bedingung B für die Druckbereitstellungseinrichtung 5 vorliegt (JA in Block 100), d.h. dass ein kritischer Zustand der Druckbereitstellungseinrichtung 5 gegeben ist, so wird in den Sonderregelungsmodus S umgeschaltet. Liegt nun die entsprechende Bremsbedingung A in Block 220 vor (JA in Block 220), d.h. es wird im Sonderregelungsmodus S eine Beendigung des Druckaufbaus an allen an die Druckbereitstellungseinrichtung 5 angeschlossenen Radbremsen angefordert, so werden in Block 400 die Einlassventile der Radbremsen bis auf zumindest eine Radbremse, die sogenannte ausgewählte Radbremse bzw. ausgewählten Radbremsen, geschlossen. Für jede ausgewählte Radbremse wird das zugehörige Einlassventil offen gehalten und das zugehörige Auslassventil zumindest zeitweise geöffnet, so dass Druckmittelvolumen von der Druckbbereitstellungseinrichtung 5 in den Druckmittelvorratsbehälter 4 abgelassen werden kann . Weiterhin wird in Block 400 ein Ansteuersignal an die Druckbereitstellungseinrichtung 5 ausgegeben, welches ein Vorschieben des Kolbens 36 der Druckbereitstellungseinrichtung 5 beendet.

Ob ein kritischer Betriebszustand der Druckbereitstellungseinrichtung 5 vorliegt oder nicht, wird beispielsgemäß anhand einer Geschwindigkeit der Druckbereitstellungseinrichtung 5 erkannt, z.B. der Verschiebegeschwindigkeit des Kolbens 36 oder der Drehgeschwindigkeit des Rotors des Elektromotors 35. Zusätzlich kann zur Erkennung eine Position der Druckbereitstellungseinrichtung 5 ausgewertet werden, z.B. Lage/Position des Kolbens 36 oder der Rotorlage des Elektromotors 35.

Beispielsgemäß sind die Radbremsen einer Fahrzeugachse, vorzugsweise die Radbremsen 8, 9 an der Hinterachse, ausgewählte Radbremsen. Entsprechend werden in Block 400 nur die Einlassventile 6c und 6d der Radbremsen 10 und 11 geschlossen, während die Einlassventile 6a und 6b der ausgewählten Radbremsen 8 und 9 geöffnet bleiben und die Auslassventile 7a und 7b der ausgewählten Radbremsen 8 und 9 geöffnet werden. D.h. im Vergleich zu Block 300 wird in Block 400 anstelle des Schließens der Einlassventile 6a, 6b ein Öffnen der Auslassventile 7a, 7b der ausgewählten Radbremsen 8, 9 durchgeführt.

Um die Öffnungszeit der Auslassventile 7a, 7b der ausgewählten Radbremsen 8, 9 optimal zu wählen oder die Möglichkeit einer Beendigung des Sonderregelung des Blocks 400 zu erkennen, wird beispielsgemäß in Block 400 eine Druckmittelvolumenabschätzung durchgeführt, in welcher bestimmt wird, wie viel Druckmittelvolumen aus der Druckbereitstellungseinrichtung 5 nach Ausgabe des Ansteuersignals zur Beendigung des Vorschiebens des Kolbens 36 noch verdrängt wird, bis der Kolben 36 zu einem Stillstand kommt. Anhand des so abgeschätzten Druckmittelvolumens kann dann die geeignete Öffnungszeit der Auslassventile oder der Zeitpunkt zum Übergang in die Normalregelung des Blocks 300 bestimmt werden, so dass sicher gestellt ist, dass ausreichend Druckmittelvolumen in den Druckmittelvorratsbehälter 4 abgeflossen ist, um einen kritischen Druck in der Druckbereitstellungseinrichtung 5 zu verhindern.

Die Sonderregelung des Blocks 400 wird beispielsgemäß auch beendet, wenn die Druckbereitstellungseinrichtung 5 sich nicht mehr in einem kritischen Zustand befindet (Bedingung B liegt nicht mehr vor) . Entsprechend wird die Bedingung B in Block 100 wiederholt überprüft, was in Fig. 2 durch den gestrichelten Pfeil schematisch angedeutet ist.

Im Folgenden wird ein weiteres beispielsgemäßes Verfahren zum Betrieb einer Bremsanlage erläutert.

Kommt es während einer Normalbremsung mittels der Druckbereitstellungseinrichtung 5, z.B. durch eine starke Reibwertverringerung der Fahrbahn, zu einem Eintritt in die Antiblockierregelung (ABS-Regelung) für jede der Radbremsen 8-11, wird der durch die ABS-Regelung angeforderte Druckstopp an den Radbremsen 8-11 durch das Schließen aller Radeinlassventile 6a-6d umgesetzt. Gleichzeitig oder zeitnah wird ein Ansteuersignal für den Antrieb 35 der Druckbereitstellungseinrichtung 5 erzeugt, welches ein Beenden des Verschiebens des Kolbens 36 veranlasst. Da bei einer Normalbremsung der gewünschte Druckaufbaugradient und damit die Antriebsdynamik des Antriebs 35 üblicherweise nicht besonders hoch ist, ist das Druckmittelvolumen, welches nach Ausgabe des Ansteuersignals durch die Trägheit des Antriebs noch aus dem Druckraum 37 verdrängt wird bis der Kolben 36 endlich zu einem Stillstand kommt, nicht besonders groß und führt so zu keinen kritischen Drücken in dem Druckraum 37 bzw. der Bremsanlage.

Bei sehr schnellen Antrittsgradienten (d.h. großen gewünschten Druckaufbaugradient), z.B. bei Panikbremsungen, die zu einem Eintritt in die ABS-Regelung für alle Radbremsen führen, ist hingegen die Antriebsdynamik des Antriebs 35 der Druckbereitstellungseinrichtung 5 sehr groß. Hier würde es bei einem von der ABS-Regelung angeforderten Druckstopp an den Radbremsen 8-11 durch das Schließen aller Einlassventile 6a-6d zu sehr hohen Systemdrücken im Druckraum 37 kommen. Dies geschieht insbesondere dann, wenn der Kolben 36 der Druckbereitstellungseinrichtung 5, welcher über z.B. einen bürstenlosen Elektromotor 35 und einen Kugelgewindetrieb angetrieben wird, mit sehr hoher Motordrehzahl des Elektromotors 35 angetrieben wird, um die nötige Dynamik für den Bremsdruckaufbau zu erzeugen. Würde in dieser Situation (Betrieb des elektromechanischen Aktuators mit hoher bzw. maximaler Dynamik) über die ABS-Regelung ein Bremsschlupf an allen Rädern erkannt und würden die Einlassventile 6a-6d aller Radbremsen 8-11 geschlossen, um einen weiteren Bremsdruckaufbau zu verhindern, so würde dies auch bei einem zeitgleichen Stoppbefehl an den Antrieb der Druckbereitstellungseinrichtung 5 aufgrund der Trägheit des elektromechanischen Aktuators zu einem nachfließenden Druckmittelvolumenstrom und damit zu einem hohen Staudruck in dem System führen. Dieser Druckanstieg kann zu einer Schädigung des Antriebes der Druckbereitstellungseinrichtung 5, in einem Extremfall auch zum Bersten des Systems führen.

Um einen für die Bremsanlage schädlichen Druckanstieg im Druckraum 37 der Druckbereitstellungeirichtung 5 zu verhindern, wird beispielsgemäß bei Erkennen eines kritischen Betriebszustandes der Druckbereitstellungeirichtung 5 (Vorliegen der Bedingung B) der Raddruckregler in den Modus "Burstprotection" (Sonderregelungsmodus S) gesetzt. In diesem Modus werden - bei Anforderung eines Druckaufbaustopp an allen Rädern (Vorliegen der Bremsbedingung A) - an den Radbremsen 8, 9 der Hinterachse statt dem Schließen der zugehörigen Einlassventile 6a, 6b die zugehörigen Auslassventile 7a, 7b geöffnet, um den Druckmittelvolumenstrom, der durch die Trägheit des Antriebes 35 der Druckbereitstellungseinrichtung 5 erzeugt wird und zu einem ungewollten Druckanstieg führt, direkt in den Druckmittelvorratsbehälter 4 abzulassen.

Die Erkennung eines kritischen Betriebszustandes der Druckbereitstellungeirichtung 5 erfolgt durch die Auswertung der Kolbengeschwindigkeit der Druckbereitstellungseinrichtung 5 oder der Motordrehzahl des Antriebes 35 der Druckbereitstellungseinrichtung 5 und gegebenenfalls der Kolbenposition der Druckbereitstellungseinrichtung 5.

Ergibt die Auswertung, dass sich die Druckbereitstellungseinrichtung 5 in einem kritischen Bereich/Betriebszustand befindet ("Plunger in Critical Mode", Vorliegen der Bedingung B) und wird von einer Regelfunktion (z.B. einer Antiblockierregelfunktion ABS) ein Druckaufbaustopp an allen Rädern gefordert (Vorliegen der Bremsbedingung A), so wird ein Stoppbefehl an den Regler der Druckbereitstellungseinrichtung 5 gesendet und gleichzeitig die Sonderregelung der Einlass- und Auslassventile des "Burstprotection"-Modus (Block 400) im Raddruckregler aktiviert.

Um nicht zu viel Druckmittelvolumen durch den Druckabbau über die Auslassventile 7a, 7b zu verlieren, wird das abzulassende Druckmittelvolumen anhand der zu erwartenden Antriebsdynamik des elektromechanischen Aktuators und der damit verbundenen Totzeit bis zum Stoppen des Kolbens 36 abgeschätzt und darüber die Schaltzeit (Öffnungszeiten) der Auslassventile 7a, 7b bestimmt.

Beendet wird die Sonderregelung (Block 400), wenn das abgeschätzte Druckmittelvolumen abgelassen wurde. Dann werden die Auslassventile 7a, 7b wieder geschlossen und gleichzeitig die Einlassventile 6a, 6b geschaltet, d.h. geschlossen.

Auch kann die Sonderregelung (Block 400) bzw. der Sonderregelungsmodus S beendet werden, wenn die Druckbereitstellungeirichtung 5 nicht mehr in einem kritischen Bereich ist.

Im Normalregelungsmodus erfolgt bevorzugt eine Ausgabe des Ansteuersignals an die Druckbereitstellungseinrichtung und ein Schließen der Einlassventile. Im Sonderregelungsmodus erfolgt bevorzugt eine Ausgabe des Ansteuersignals an die Druckbereitstellungseinrichtung und ein Schließen der Einlassventile nur an einer Achse, vorzugsweise an der Vorderachse, und ein Öffnen der Auslassventile an der anderen Achse, vorzugsweise an der Hinterachse. Das achsweise Schalten der entsprechenden Ventile geschieht um symmetrische Druckverhältnisse in den Radbremsen der Achse sicherzustellen.

## Patentansprüche

1. Verfahren zum Betrieb einer, insbesondere schlupfregelbaren, Bremsanlage für Kraftfahrzeuge mit
• einer elektrisch steuerbaren Druckbereitstellungseinrichtung (5), welche durch eine Zylinder-Kolben-Anordnung mit zumindest einem hydraulischen Druckraum (37) gebildet wird, deren Kolben (36) durch einen elektromechanischen Aktuator (35) verschiebbar ist,
• einer Anzahl von Radbremsen (8, 9, 10, 11), welche jeweils über ein elektrisch betätigbares, insbesondere stromlos offenes, Einlassventil (6a-6b) mit der Druckbereitstellungseinrichtung (5) verbunden sind, und
• einem elektrisch betätigbaren, insbesondere stromlos geschlossenen, Auslassventil (7a-7d) für zumindest eine der Radbremsen, insbesondere für jede der Radbremsen, mittels welchem die Radbremse mit einem, insbesondere unter Atmosphärendruck stehenden, Druckmittelvorratsbehälter (4) verbindbar ist,
wobei in einem Normalregelungsmodus (N) der Bremsanlage ein Verschieben des Kolbens (36) der Druckbereitstellungseinrichtung (5) durch Ausgabe eines Ansteuersignals an die Druckbereitstellungseinrichtung beendet wird und die Einlassventile der Radbremsen geschlossen werden, wenn eine vorgegebene Bremsbedingung (A) vorliegt,
**dadurch gekennzeichnet, dass** in einen Sonderregelungsmodus (S) umgeschaltet wird, wenn eine vorgegebene Bedingung für die Druckbereitstellungseinrichtung (B) vorliegt, wobei in dem Sonderregelungsmodus bei Vorliegen der vorgegebenen Bremsbedingung (A) ein Verschieben des Kolbens (36) der Druckbereitstellungseinrichtung (5) durch Ausgabe eines Ansteuersignals an die Druckbereitstellungseinrichtung beendet wird und für zumindest eine ausgewählte Radbremse (8, 9) das zugehörige Einlassventil (6a, 6b) offen gehalten und das zugehörige Auslassventil (7a, 7b) zumindest zeitweise geöffnet wird, während die Einlassventile (6c, 6d) der übrigen Radbremsen (10, 11) geschlossen werden.

2. Verfahren nach Anspruch 1, **dadurch gekennzeichnet, dass** die Radbremsen (8, 9) einer Achse, insbesondere der Hinterachse, des Kraftfahrzeugs ausgewählte Radbremsen sind, deren Einlassventile nicht geschlossen und deren Auslassventile zumindest zeitweise geöffnet werden.

3. Verfahren nach Anspruch 1 oder 2, **dadurch gekennzeichnet, dass** eine Druckmittelvolumenabschätzung durchgeführt wird, in welcher bestimmt wird, wie viel Druckmittelvolumen aus der Druckbereitstellungseinrichtung (5) nach Ausgabe des Ansteuersignals noch verdrängt werden wird, bis der Kolben (36) der Druckbereitstellungseinrichtung (5) zu einem Stillstand kommt oder die vorgegebene Bedingung für die Druckbereitstellungseinrichtung (B) nicht mehr vorliegt.

4. Verfahren nach Anspruch 3, **dadurch gekennzeichnet, dass** zumindest eine Öffnungszeit für das Auslassventil oder für eines der Auslassventile anhand des abgeschätzten Druckmittelvolumens bestimmt wird.

5. Verfahren nach Anspruch 3 oder 4, **dadurch gekennzeichnet, dass**
• das Auslassventil der ausgewählten Radbremse wieder geschlossen wird oder die Auslassventile der ausgewählten Radbremsen wieder geschlossen werden, und
• das Einlassventil der ausgewählten Radbremse geschlossen wird oder die Einlassventile der ausgewählten Radbremsen geschlossen werden,
wenn das abgeschätzte Druckmittelvolumen durch das Auslassventil oder die Auslassventile abgelassen wurde.

6. Verfahren nach einem der Ansprüche 1 bis 5, **dadurch gekennzeichnet, dass** von dem Sonderregelungsmodus (S) in den Normalregelungsmodus (N) umgeschaltet wird, wenn die vorgegebene Bedingung für die Druckbereitstellungseinrichtung (B) nicht mehr vorliegt.

7. Verfahren nach einem der Ansprüche 1 bis 6, **dadurch gekennzeichnet, dass** die vorgegebene Bremsbedingung (A) ein Beenden eines Druckaufbaus an jeder der Radbremsen ist, welche insbesondere durch eine Antiblockierregelfunktion der Bremsanlage angefordert wird.

8. Verfahren nach einem der Ansprüche 1 bis 7, **dadurch gekennzeichnet, dass** die vorgegebene Bedingung für die Druckbereitstellungseinrichtung (B) ein kritischer Betriebszustand der Druckbereitstellungseinrichtung ist, welcher anhand einer Geschwindigkeit der Druckbereitstellungseinrichtung erkannt wird.

9. Verfahren nach Anspruch 8, **dadurch gekennzeichnet, dass** die vorgegebene Bedingung (B) zusätzlich anhand einer Position der Druckbereitstellungseinrichtung erkannt wird.

10. Bremsanlage für Kraftfahrzeuge mit
• einer elektrisch steuerbaren Druckbereitstellungseinrichtung (5), welche durch eine Zylinder-Kolben-Anordnung mit zumindest einem hydraulischen Druckraum (37) gebildet wird, deren Kolben (36) durch einen elektromechanischen Aktuator (35) verschiebbar ist,
• einer Anzahl von Radbremsen (8, 9, 10, 11), welche jeweils über ein elektrisch betätigbares, insbesondere stromlos offenes, Einlassventil (6a-6b) mit der Druckbereitstellungseinrichtung (5) verbunden sind, und
• einem elektrisch betätigbaren, insbesondere stromlos geschlossenen, Auslassventil (7a-7d) für zumindest eine der Radbremsen, insbesondere für jede der Radbremsen, mittels welchem die Radbremse mit einem, insbesondere unter Atmosphärendruck stehenden, Druckmittelvorratsbehälter (4) verbindbar ist, und
• einer elektronischen Steuer- und Regeleinheit (12) zur Ansteuerung der Druckbereitstellungseinrichtung (5), der Einlassventile (6a-6d) und der Auslassventile (7a-7d),
**dadurch gekennzeichnet, dass** in der Steuer- und Regeleinheit (12) ein Verfahren nach einem der Ansprüche 1 bis 9 durchgeführt wird.

## Claims

1. Method for operating a brake system for motor vehicles, in particular a brake system that is slip-controlled, with
• an electrically controlled pressure supply device (5) that is formed by a cylinder-piston assembly with at least one hydraulic pressure chamber (37), the piston of which (36) can be displaced by an electromechanical actuator (35),
• a number of wheel brakes (8, 9, 10, 11), each of which is connected to the pressure supply device (5) via an electrically actuated, in particular normally open, inlet valve (6a-6b),
• an electrically actuated, in particular normally closed, outlet valve (7a-7d) for at least one of the wheel brakes, in particular for each of the wheel brakes, by means of which the wheel brake can be connected to a pressure medium storage container (4) that is in particular at atmospheric pressure,
wherein in a normal control mode (N) of the brake system, a displacement of the piston (36) of the pressure supply device (5) is terminated by outputting an actuation signal to the pressure supply device and the inlet valves of the wheel brakes are closed if a predetermined braking condition (A) exists,
**characterized in that** the control mode is changed to a special control mode (S) if a predetermined condition (B) for the pressure supply device exists, wherein if the predetermined braking condition (A) exists in the special control mode, a displacement of the piston (36) of the pressure supply device (5) is terminated by outputting an actuation signal to the pressure supply device and the associated inlet valve (6a, 6b) is held open for at least one selected wheel brake (8, 9) and the associated outlet valve (7a, 7b) is at least temporarily opened, whereas the inlet valves (6c, 6d) of the remaining wheel brakes (10, 11) are closed if the estimated volume of pressure medium has been discharged through the outlet valve or the outlet valves.

2. Method according to Claim 1, **characterized in that** the wheel brakes (8, 9) of an axle, in particular of the rear axle, of the motor vehicle are selected wheel brakes, the inlet valves or which are not closed and the outlet valves of which are at least temporarily opened.

3. Method according to Claim 1 or 2, **characterized in that** a pressure medium volume estimation is carried out, in which it is determined how much volume of pressure medium is still displaced from the pressure supply device (5) following the output of the actuation signal until the piston (36) of the pressure supply device (5) comes to a standstill or the predetermined condition for the pressure supply device (B) no longer exists.

4. Method according to Claim 3, **characterized in that** at least one opening time for the outlet valve or for one of the outlet valves is determined using the estimated pressure medium volume.

5. Method according to Claim 3 or 4, **characterized in that**
• the outlet valve of the selected wheel brake is closed again or the outlet valves of the selected wheel brakes are closed again, and
• the inlet valve of the selected wheel brake is closed or the inlet valves of the selected wheel brakes are closed,
when the estimated pressure medium volume has been discharged through the outlet valve or the outlet valves.

6. Method according to any one of Claims 1 to 5, **characterized in that** the control mode is changed from the special control mode (S) to the normal control mode (N) if the predetermined condition for the pressure supply device (B) no longer exists.

7. Method according to any one of Claims 1 to 6, **characterized in that** the predetermined braking condition (A) is a termination of a build-up of pressure at each of the wheel brakes, which in particular is demanded by an anti-lock control function of the brake system.

8. Method according to any one of Claims 1 to 7, **characterized in that** the predetermined condition for the pressure supply device (B) is a critical operating state of the pressure supply device, which is detected using a speed of the pressure supply device.

9. Method according to Claim 8, **characterized in that** the predetermined condition (B) is additionally detected using a position of the pressure supply device.

10. Brake system for motor vehicles with
• an electrically controlled pressure supply device (5) that is formed by a cylinder-piston assembly with at least one hydraulic pressure chamber (37), the piston of which (36) can be displaced by an electromechanical actuator (35),
• a number of wheel brakes (8, 9, 10, 11), each of which is connected to the pressure supply device (5) via an electrically actuated, in particular normally open inlet valve (6a-6b), and
• an electrically actuated, in particular normally closed outlet valve (7a-7d) for at least one of the wheel brakes, in particular for each of the wheel brakes, by means of which the wheel brake can be connected to a pressure medium storage container (4) that is in particular at atmospheric pressure, and
• an electronic control and regulating unit (12) for actuation of the pressure supply device (5), the inlet valves (6a-6d) and the outlet valves (7a-7d),
**characterized in that** a method according to any one of Claims 1 to 9 is carried out in the control and regulating unit (12).

## Revendications

1. Procédé permettant de faire fonctionner un système de freinage, en particulier à patinage réglable, pour des véhicules automobiles, avec
• un dispositif de production de pression (5) à commande électrique, qui est formé par un ensemble cylindre-piston avec au moins une chambre de pression hydraulique (37), dont le piston (36) est déplaçable au moyen d'un actionneur électromécanique (35),
• un nombre de freins de roue (8, 9, 10, 11), qui sont respectivement raccordés au dispositif de production de pression (5) par une soupape d'admission (6a - 6d) actionnable électriquement, en particulier ouverte sans courant, et
• une soupape d'échappement (7a - 7d) actionnable électriquement, en particulier fermée sans courant, pour au moins un des freins de roue, en particulier pour chacun des freins de roue, au moyen de laquelle le frein de roue peut être raccordé à un réservoir de stockage de fluide sous pression (4), qui se trouve en particulier à la pression atmosphérique,
dans lequel dans un mode de régulation normal (N) du système de freinage un déplacement du piston (36) du dispositif de production de pression (5) est terminé par l'envoi d'un signal de commande au dispositif de production de pression et les soupapes d'admission des freins de roue sont fermées, lorsqu'une condition de freinage prédéterminée (A) est présente,
**caractérisé en ce que** l'on bascule vers un mode de régulation spécial (S) lorsqu'une condition prédéterminée pour le dispositif de production de pression (B) est présente, dans lequel dans le mode de régulation spécial, en présence de la condition de freinage prédéterminée (A), on arrête un déplacement du piston (36) du dispositif de production de pression (5) par l'envoi d'un signal de commande au dispositif de production de pression et pour au moins un frein de roue sélectionné (8, 9) on maintient ouverte la soupape d'admission correspondante (6a, 6b) et on ouvre au moins temporairement la soupape d'échappement correspondante (7a, 7b), tandis que l'on ferme les soupapes d'admission (6c, 6d) des autres freins de roue (10, 11).

2. Procédé selon la revendication 1, **caractérisé en ce que** les freins de roue (8, 9) d'un essieu, en particulier d'un essieu arrière, du véhicule automobile, sont des freins de roue sélectionnés, dont les soupapes d'admission ne sont pas fermées et dont les soupapes d'échappement sont au moins temporairement ouvertes.

3. Procédé selon la revendication 1 ou 2, **caractérisé en ce que** l'on procède à une estimation du volume de fluide sous pression, au cours de laquelle on détermine quelle quantité du volume de fluide sous pression est encore refoulée hors du dispositif de production de pression (5) après l'envoi du signal de commande, jusqu'à ce que le piston (36) du dispositif de production de pression (5) se trouve à l'arrêt ou que la condition prédéterminée pour le dispositif de production de pression (B) ne soit plus présente.

4. Procédé selon la revendication 3, **caractérisé en ce que** l'on détermine au moins un temps d'ouverture pour la soupape d'échappement ou pour une des soupapes d'échappement à l'aide du volume de fluide sous pression estimé.

5. Procédé selon la revendication 3 ou 4, **caractérisé en ce que**
• on ferme de nouveau la soupape d'échappement du frein de roue sélectionné ou les soupapes d'échappement des freins de roue sélectionnés, et
• on ferme la soupape d'admission du frein de roue sélectionné ou les soupapes d'admission des freins de roue sélectionnés,
lorsque le volume de fluide sous pression estimé a été évacué par la soupape d'échappement ou par les soupapes d'échappement.

6. Procédé selon l'une quelconque des revendications 1 à 5, **caractérisé en ce que** l'on bascule du mode de régulation spécial (S) vers le mode de régulation normal (N), lorsque la condition prédéterminée pour le dispositif de production de pression (B) n'est plus présente.

7. Procédé selon l'une quelconque des revendications 1 à 6, **caractérisé en ce que** la condition de freinage prédéterminée (A) est une fin d'une montée de pression à chacun des freins de roue, qui est demandée en particulier par une fonction de réglage d'antiblocage du système de freinage.

8. Procédé selon l'une quelconque des revendications 1 à 7, **caractérisé en ce que** la condition prédéterminée pour le dispositif de production de pression (B) est un état de fonctionnement critique du dispositif de production de pression, qui est détecté par la vitesse du dispositif de production de pression.

9. Procédé selon la revendication 8, **caractérisé en ce que** la condition prédéterminée (B) est détectée en outre à l'aide d'une position du dispositif de production de pression.

10. Système de freinage pour des véhicules automobiles, avec
• un dispositif de production de pression (5) à commande électrique, qui est formé par un ensemble cylindre-piston avec au moins une chambre de pression hydraulique (37), dont le piston (36) est déplaçable au moyen d'un actionneur électromécanique (35),
• un nombre de freins de roue (8, 9, 10, 11), qui sont respectivement raccordés au dispositif de production de pression (5) par une soupape d'admission (6a - 6d) actionnable électriquement, en particulier ouverte sans courant, et
• une soupape d'échappement (7a - 7d) actionnable électriquement, en particulier fermée sans courant, pour au moins un des freins de roue, en particulier pour chacun des freins de roue, au moyen de laquelle le frein de roue peut être raccordé à un réservoir de stockage de fluide sous pression (4), qui se trouve en particulier à la pression atmosphérique, et
• une unité électronique de commande et de régulation (12) pour la commande du dispositif de production de pression (5), des soupapes d'admission (6a - 6d) et des soupapes d'échappement (7a - 7d),
**caractérisé en ce que** l'on exécute dans l'unité de commande et de régulation (12) un procédé selon l'une quelconque des revendications 1 à 9.
